# FASCICULE DE BREVET EUROPEEN

(11) **EP 0 508 888 B1**
(45) Date de publication et mention de la délivrance du brevet: **13.09.1995**
(21) Numéro de dépôt: 92400973.1
(22) Date de dépôt: 08.04.1992
(51) Int. Cl.: G01H 3/00, G01N 29/04

(54) **Méthode de sélection de traducteurs ultrasonores**
Verfahren zur Auswahl von Ultraschallwandlern
Method of selecting ultrasonic transducers

(30) Priorité: 10.04.1991 FR 9104327
(43) Date de publication de la demande: 14.10.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Guillot, Eric, F-94300 Vincennes (FR); Jagnoux, Pierre Maurice, F-91210 Draveil (FR); Mangenet, Gérard Yves, F-91860 Epinay (FR)

(56) Documents cités:
- IEEE 1988 ULTRASONICS SYMPOSIUM, Chicago, Illinois, 2-5 octobre 1988, vol. 1, pages 895-900, IEEE, New York, US; H.A. KUNKEL: "New technique for characterizing ultrasonic transducers independently of pulser and receiver electronics"
- MEASUREMENT TECHNIQUES, vol. 25, no. 3, avril 1982, pages 270-272, Plenum Publishing Corp., New York, US; I.A. KRIVOSHEEV et al.: "Calibration of piezoelectric tansducers by a special method"
- JOURNAL OF THE ACOUSTICAL SOCIETY OF AMERICA, vol. 78, no. 5, novembre 1985, pages 1519-1523, Acoustical Society of America, New York, US; J.D. AINDOW et al.: "Quantitative investigation of disk ultrasonic sources"

## Description

La présente invention a pour objet une méthode de sélection des traducteurs ultrasonores utilisés dans les dispositifs de contrôle non destructif par ultrasons.

Il est connu d'utiliser des dispositifs de contrôle ultrasonores pour les essais non destructifs sur les matériaux et en échographie médicale. Dans le domaine des essais sur les matériaux, ces techniques permettent la détection d'hétérogénéité et de défauts dans les pièces contrôlées, ainsi que la caractérisation des défauts.

Les traducteurs mis en oeuvre dans ces dispositifs de contrôle ultrasonore ont pour rôle de générer des ondes acoustiques à partir d'une énergie électrique qui leur est fournie, les ondes acoustiques se propageant dans le milieu à contrôler et étant réfléchies par des réflecteurs, les ondes ainsi réfléchies étant reçues par le traducteur émetteur fonctionnant aussi comme récepteur ou par un autre traducteur ne fonctionnant que comme récepteur, qui les convertit en signaux électriques qui sont alors analysés.

Ces traducteurs ont des durées de vie limitées et leur remplacement par des traducteurs de caractéristiques théoriques identiques ne devraient pas remettre en cause les résultats des mesures.

Toutefois, il s'avère que des écarts importants ont pu être observés entre des résultats de contrôles effectués de manière identique avec différents traducteurs de caractéristiques théoriques identiques, même après étalonnage.

Ces écarts portent notamment sur l'amplitude des échos de défaut qui pouvait varier du simple au double.

L'article de H.A. KUNKEL publié aux pages 895-900 du volume 1 (5.10.1988) de IEEE 1988 ULTRASONICS SYMPOSIUM décrit une technique de caractérisation des traducteurs ultrasonores, dans le cas d'un traducteur plan. Cette technique consiste à diviser le signal reçu par le signal d'émission de l'impulsion et permet de comparer un résultat expérimental obtenu sur un traducteur plan à un résultat issu de calculs théoriques, en spectre de fréquences.
L'article de I.A. KRIVOSHEEV et autres publié aux pages 270-272 du volume 25 numéro 3 d'Avril 1982 de MEASUREMENT TECHNIQUES propose un dispositif amélioré pour la détermination du spectre de fréquence d'un traducteur ultrasonore grâce à un montage particulier qui améliore le rapport signal/bruit dans les mesures fréquentielles.
L'article de J.D AINDOW et autres publié aux pages 1519-1523 du volume 78 numéro 5, Novembre 1985 de JOURNAL OF THE ACOUSTICAL SOCIETY Or AMERICA compare des résultats expérimentaux à des résultats théoriques obtenus par calculs limités au cas de traducteurs ultrasonores plans. Des mesures fréquentielles sont réalisées au moyen d'un hydrophone, sans utilisation de réflecteur. Les investigations portent sur les mesures de champ ultrasonore.

L'ouvrage de J.L. Pelletier. "La pratique du contrôle industriel par ultrasons" Tome 2, publié aux Editions Communications Actives, précise page 55, que de nombreuses difficultés et erreurs proviennent des traducteurs et qu'il est donc nécessaire de connaître leurs caractéristiques.

Il décrit plusieurs caractéristiques à déterminer, notamment la fréquence de travail : la mesure de cette fréquence est effectuée par analyse spectrale de l'écho obtenu sur une interface eau/air de dimensions considérées comme infinies, le faisceau des ondes ultrasonores émises étant perpendiculaire à l'interface et l'interface étant située à la limite du champ proche pour les traducteurs plans ou à la focale pour les traducteurs focalisés.

Malgré la détermination de ces caractéristiques, le problème de fiabilité et de reproductibilité des contrôles ultrasonores n'est pas résolu.

La présente invention propose de remédier à ce problème par l'utilisation de dispositifs de contrôle ultrasonore équipés de traducteurs sélectionnés par la méthode décrite par la revendication 1.

La méthode de sélection des traducteurs consiste à établir, pour un traducteur à tester, le spectre de fréquence de l'écho obtenu sur un réflecteur déterminé, à comparer la forme du spectre obtenu à la forme du spectre obtenu dans les mêmes conditions avec un traducteur dit de référence et à adopter le traducteur testé si les formes comparées sont identiques.

Selon l'invention, le réflecteur est positionné au niveau de la tache focale pour un traducteur focalisé,
Selon un mode de réalisation de l'invention, le réflecteur déterminé est un réflecteur plan dit infini, c'est à dire dont les dimensions sont supérieures à celles du faisceau ultrasonore émis et le réflecteur plan est perpendiculaire à la direction de propagation des ondes ultrasonores émises.

Selon une autre caractéristique de l'invention, seule la forme du spectre est prise en compte, la densité spectrale étant ensuite corrigée par étalonnage sur plan ou sur défauts artificiels.

L'invention sera mieux comprise à la lecture de la description suivante d'un mode de réalisation de l'invention, fait en référence aux dessins annexés sur lesquels :
- la figure 1 est une vue schématique d'une chaîne de mesure ultrasonore,
- la figure 2 représente le montage expérimental utilisé selon une forme préférée de l'invention,
- la figure 3 représente les spectres de fréquence de traducteurs testés et d'un traducteur dit de référence.

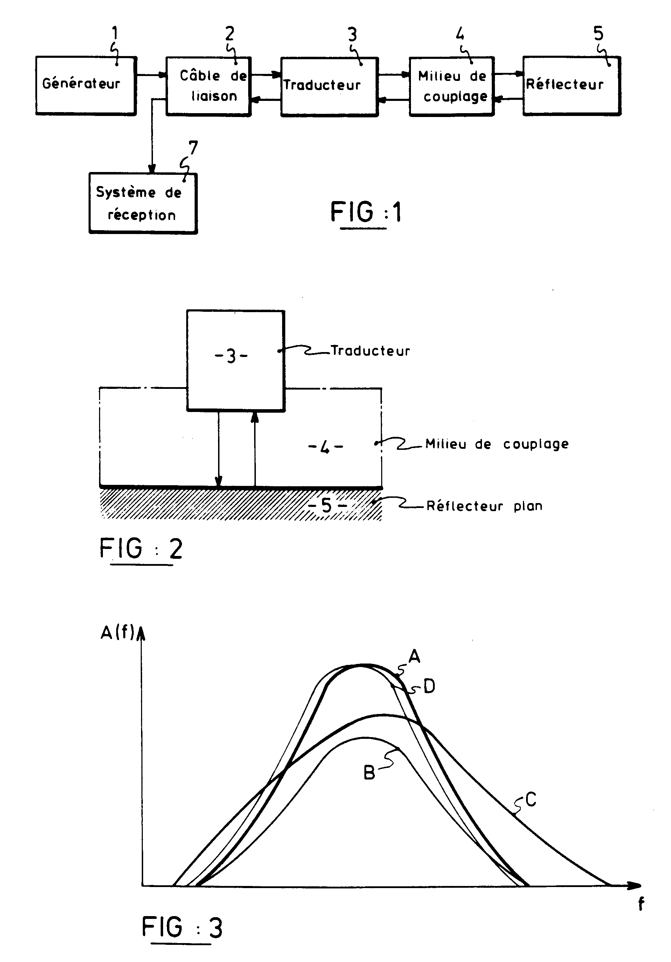

La figure 1 représente une chaîne de mesure classique de contrôle par ultrasons et comprend notamment :
un générateur d'impulsions électriques 1, un câble de liaison 2 dudit générateur 1 au traducteur 3, un traducteur 3 fonctionnant en émission et en réception, un milieu de couplage 4, un réflecteur 5 réfléchissant les ondes ultrasonores, et un système de réception 7 lié au traducteur 3 par le câble de liaison 2.

Conformément à l'invention, on utilise une telle chaîne de mesure dans laquelle le système de réception 7 permet de traiter les données acquises et notamment de visualiser les résultats de contrôle et par exemple les spectres de fréquence.

La figure 2 représente le montage expérimental utilisé selon une forme préférée de l'invention. Ce montage utilise la technique du contrôle par immersion, de manière à ce qu'un liquide de couplage soit interposé entre le traducteur et le réflecteur. Les ondes ultrasonores émises par le traducteur 3 sont réfléchies sur le réflecteur 5, le faisceau des ondes émises étant perpendiculaire au réflecteur. Ce réflecteur est un plan, dit infini, c'est à dire dont les dimensions sont supérieures à celles du faisceau des ondes ultrasonores émises. Ledit plan réflecteur est positionné au niveau de la tache focale du traducteur focalisé, c'est à dire dans la position donnant l'écho d'amplitude maximal.

La figure 3 représente un exemple de spectres de fréquence obtenus avec plusieurs traducteurs mis en oeuvre dans un dispositif de contrôle par ultrasons tel que décrit ci-dessus en référence aux figures 1 et 2.

La méthode selon l'invention consiste à comparer ces différents spectres dans leurs formes. En effet, la demanderesse a pu démontrer que si des spectres correspondant à différents traducteurs étaient identiques dans leur forme et leur amplitude, les résultats des mesures effectuées à partir des signaux provenant des discontinuités du matériau contrôlé, avec ces différents traducteurs étaient reproductibles. Si les spectres sont identiques dans leur forme et non dans leur amplitude, il est possible de corriger les écarts d'amplitude par étalonnage sur plan ou défauts artificiels par réglage du gain ou de l'atténuation du dispositif, ceci permettant d'obtenir des spectres identiques et par voie de conséquence des résultats de mesures fiables et reproductibles lorsque l'on utilise ces différents traducteurs.

En référence à la figure 3 et selon la méthode énoncée ci-dessus, le spectre (A), dit spectre de référence, conduira à éliminer le traducteur correspondant au spectre (C), à retenir le traducteur correspondant au spectre (B) dont l'amplitude pourra être corrigée par étalonnage pour obtenir le spectre (A), et à retenir également le traducteur de spectre (D) dont la forme est approximativement identique à celle du spectre (A) moyennant une tolérance de 1 dB, par exemple.

Cette tolérance, donnée à titre indicatif, peut être modulée en fonction de la précision de mesure demandée.

Grâce à la méthode selon l'invention utilisant l'analyse de spectre de fréquence, la sélection des traducteurs peut être opérée en ne retenant comme utilisable, pour obtenir des résultats de contrôle fiables, que des ensembles de traducteurs dont les spectres de fréquence, obtenus dans les conditions déterminées ci-dessus, sont identiques au moins dans leur forme.

Pour que la méthode décrite ci-dessus soit fiable, il est nécessaire que la chaîne de mesure utilisée pour tester les traducteurs ait les mêmes caractéristiques que la chaîne de mesure de référence. En effet, chacun des éléments de la channe a une influence sur la forme du spectre obtenu. Il convient donc dans le cas où au moins deux dispositifs de contrôle sont utilisés, de définir précisément chacun des éléments de la chaîne et notamment, les éléments permettant l'excitation du traducteur : le générateur d'impulsions électriques, l'impulsion d'excitation, le câble de liaison du générateur au traducteur.

Une application de la méthode selon l'invention est par exemple qu'un utilisateur de dispositif de contrôle par ultrasons définisse une forme de spectre à laquelle devra se conformer son fournisseur de traducteurs, le fournisseur devant disposer d'un dispositif de contrôle dont les éléments sont identiques à ceux de son client comme cela est mentionné ci-dessus.

La méthode selon l'invention est également applicable pendant la vie du traducteur. Celui-ci sera rejeté quand, sous l'effet du vieillissement, le spectre obtenu dans les conditions déterminées ci-dessus, n'est plus identique au moins dans sa forme au spectre de référence.

## Revendications

1. Méthode de sélection des traducteurs ultrasonores utilisés dans les dispositifs de contrôle par ultrasons caractérisée en ce qu'elle comporte les étapes suivantes :
a) déterminer les spectres de fréquence de l'écho obtenu sur un réflecteur déterminé (5) en utilisant un traducteur focalisé de référence ;
b) déterminer le spectre de fréquence de l'écho obtenu sur ledit réflecteur (5) utilisé à l'étape a) en utilisant un traducteur focalisé testé (3) dans les mêmes conditions que ledit traducteur focalisé de référence, le traducteur focalisé de référence et le traducteur focalisé testé (3) ayant respectivement chacun sa tache focale positionnée au niveau dudit réflecteur (5) ;
c) comparer la forme du spectre de fréquence obtenu en utilisant ledit traducteur focalisé testé (3) de l'étape b) avec la forme du spectre de fréquence obtenu en utilisant ledit traducteur focalisé de référence de l'étape a) et
d) sélectionner ledit traducteur focalisé testé (3) à utiliser dans le dispositif de contrôle par ultrasons si les formes des spectres de fréquence dudit traducteur focalisé testé (3) et dudit traducteur focalisé de référence sont identiques.

2. Méthode selon la revendication 1 dans laquelle ledit réflecteur déterminé (5) est un réflecteur plan dont les dimensions sont supérieures au diamètre d'émission des faisceaux ultra-sonores émis par ledit traducteur et ledit réflecteur (5) est orienté de telle façon que le plan de réflexion est perpendiculaire à la direction de propagation des ondes ultrasonores émises par ledit traducteur.

3. Méthode selon l'une quelconque des revendications 1 et 2, caractérisée en ce que l'amplitude des spectres de fréquence des traducteurs sélectionnés est adaptée par réglage du gain ou atténuation du dispositif de contrôle, sans modification de la forme du spectre de fréquence.

4. Méthode selon l'une quelconque des revendications 1 à 3, caractérisé en en ce que les conditions d'excitation des traducteurs sont prédéterminées et conservées identiques pour l'obtention des spectres de fréquence.

## Claims

1. Method of selecting ultrasonic transducers used in ultrasonic checking devices, characterized in that it includes the following stages:
a) determining the frequency spectra of the echo obtained on a defined reflector (5), by using a reference focused transducer;
b) determining the frequency spectrum of the echo obtained on the said reflector (5) used in stage a) by using a focused transducer (3) tested in the same conditions as the said referenced focused transducer, the reference focused transducer and the tested focused transducer (3) each respectively having its focal point positioned in the region of the said reflector (5);
c) comparing the shape of the frequency spectrum obtained by using the said tested focused transducer (3) of stage b) with the shape of the frequency spectrum obtained by using the said reference focused transducer of stage a) and
d) selecting the said tested focused transducer (3) to be used in the ultrasonic checking device if the shapes of the frequency spectra of the said tested focused transducer (3) and of the said reference focused transducer are identical.

2. Method according to Claim 1, in which the said defined reflector (5) is a planar reflector the dimensions of which are greater than the emission diameter of the ultrasonic beams emitted by the said transducer and the said reflector (5) is oriented in such a way that the plane of reflection is perpendicular to the direction of propagation of the ultrasonic waves emitted by the said transducer.

3. Method according to either of Claims 1 and 2, characterized in that the amplitude of the frequency spectra of the transducers selected is matched by setting the gain or attenuation of the checking device, without modifying the shape of the frequency spectrum.

4. Method according to any one of Claims 1 to 3, characterized in that the conditions of excitation of the transducers are predetermined and kept identical for obtaining the frequency spectra.

## Patentansprüche

1. Verfahren zur Auswahl von Ultraschallwandlern, die in Ultraschall-Prüfungsvorrichtungen verwendet werden,
dadurch gekennzeichnet,
daß es aus folgenden Schritten besteht:
a) Bestimmen der Frequenzspektren des an einem bestimmten Reflektor (5) erzielten Echos unter Verwendung eines fokussierten Referenzwandlers;
b) Bestimmen des Frequenzsprektrums des an dem genannten, in Schritt a) verwendeten Reflektor (5) erzielten Echos unter Verwendung eines fokussierten getesteten Wandlers (3) unter den gleichen Bedingungen wie mit dem fokussierten Referenzwandler, wobei der fokussierte Referenzwandler und der fokussierte getestete Wandler (3) ihren Fokusfleck jeweils im Bereich des genannten Reflektors (5) positioniert haben;
c) Vergleichen der Form des Frequenzspektrums, das unter Verwendung des genannten fokussierten getesteten Wandlers (3) von Schritt b) erzielt wurde, mit der Form des Frequenzspektrums, das unter Verwendung des genannten fokussierten Referenzwandlers von Schritt a) erzielt wurde, und
d) Auswählen des genannten fokussierten getesteten Wandlers (3), der in der Ultraschallprüfvorrichtung zu verwenden ist, wenn die Formen der Frequenzspektren des genannten fokussierten getesteten Wandlers (3) und des genannten fokussierten Referenzwandlers identisch sind.

2. Verfahren nach Anspruch 1, wobei der genannte bestimmte Reflektor (5) ein Ebenenreflektor ist, dessen Dimensionen größer sind als der Abstrahlungsdurchmesser der von dem genannten Wandler abgegebenen Ultraschallbündel, und der genannte Reflektor (5) derart ausgerichtet ist, daß die Reflexionsebene senkrecht zur Ausbreitungsrichtung der von dem genannten Wandler abgegebenen Ultraschallwellen liegt.

3. Verfahren nach einem der Ansprüche 1 und 2, dadurch gekennzeichnet, daß die Amplitude der Frequenzspektren der ausgewählten Wandler durch Einstellen der Verstärkung oder Dämpfung der Prürvorrichtung ohne Veränderung der Form des Frequenzspektrums angepaßt wird.

4. Verfahren nach einem der Ansprüche 1 bis 3, dadurch gekennzeichnet, daß die Bedingungen der Erregung der Wandler vorbestimmt und zur Erzielung der Frequenzspektren identisch gehalten werden.
